# EUROPEAN PATENT APPLICATION

(11) **EP 4 152 493 A1**
(43) Date of publication of application: **22.03.2023**
(21) Application number: 22804067.1
(22) Date of filing: 20.05.2022
(51) Int. Cl.: H01M 50/179, H01M 50/188, H01M 50/184, H01M 50/198

(54) **CYLINDRICAL BATTERY**

(30) Priority: 21.05.2021 CN 202121100824 U
(71) Applicant: Eve Power Co., Ltd., Jingmen, Hubei 448000 (CN)
(72) Inventor: HUANG, Liming, Jingmen, Hubei 448000 (CN); YUE, Liangliang, Jingmen, Hubei 448000 (CN); LIU, Jing, Jingmen, Hubei 448000 (CN); XU, Yuebin, Jingmen, Hubei 448000 (CN); HE, Wei, Jingmen, Hubei 448000 (CN)
(74) Representative: HGF
(86) International application number: PCT/CN2022/094118
(87) International publication number: WO 2022/242748

(57) **Abstract**

A cylindrical battery is provided, which includes a case, a positive pole and an insulation sealing member. The case is a cylindrical groove structure. The positive pole is riveted to the case, and the insulation sealing member is arranged between the positive pole and the case. The insulation sealing member comprises an upper insulation sealing member and a lower insulation sealing member, the upper insulation sealing member is arranged outside the case and is engaged with and connected to the case, and the lower insulation sealing member is arranged inside the case. At least one of the upper insulation sealing member and the lower insulation sealing member is provided with an annular protrusion block, the annular protrusion block fits closely against an outer sidewall of a portion, passing through the case, of the positive pole, and the outer sidewall of the portion, passing through the case, of the positive pole presses the annular protrusion block towards an inner sidewall of a portion, being passed through, of the case.

## Description

This application claims the priority of Chinese Patent Application No. 202121100824.8, filed with the Chinese Intellectual Property Administration on May 21, 2021, the disclosure of which is incorporated herein by reference in its entirety.

### TECHNICAL FIELD

The present application relates to the field of batteries, for example, to a cylindrical battery.

### BACKGROUND

The cylindrical full-tab battery differs from the cylindrical lithium-ion battery in the related art in that a groove opening of the case of the cylindrical lithium-ion battery in the related art is connected to a cap, and the cap serves as a positive connection terminal; however, a groove opening of the case of the cylindrical full-tab battery is connected to a negative cap, and an end face, remote from the groove opening, of the case is riveted to a positive pole, and the positive pole serves as a positive connection terminal.

For the cylindrical full-tab battery, since the positive pole is riveted to the case, the movements of the positive pole in a horizontal direction and vertical direction are restricted, but the positive pole has the possibility of rotation due to its columnar structure.

### SUMMARY

The present application provides a cylindrical battery, which can prevent rotation of a positive pole by the cooperation between a case, the positive pole and an insulation sealing member.

The following technical solution is adopted in the present application. A cylindrical battery is provided, which includes a case, a positive pole and an insulation sealing member. The case is a cylindrical groove structure. The positive pole is riveted to the case, and the insulation sealing member is arranged between the positive pole and the case. The insulation sealing member includes an upper insulation sealing member and a lower insulation sealing member, the upper insulation sealing member is arranged outside the case and is engaged with and connected to the case, and the lower insulation sealing member is arranged inside the case. At least one of the upper insulation sealing member and the lower insulation sealing member is provided with an annular protrusion block, the annular protrusion block fits closely against an outer sidewall of a portion, passing through the case, of the positive pole, and the outer sidewall of the portion, passing through the case, of the positive pole presses the annular protrusion block towards an inner sidewall of a portion, being passed through, of the case.

### BRIEF DESCRIPTION OF DRAWINGS

The drawings further illustrate the present application, however, embodiments in the drawings do not constitute any limitation on the present application.
FIG. 1 is a front view of a cylindrical battery according to an embodiment of the present application.
FIG. 2 is a sectional view of a local part A in FIG. 1.
FIG. 3 is a front view of a positive pole according to an embodiment of the present application.
FIG. 4 is a schematic structural diagram of a positive pole according to an embodiment of the present application.
FIG. 5 is a schematic structural diagram of an upper insulation sealing member according to an embodiment of the present application.
FIG. 6 is a schematic structural diagram of an upper insulation sealing member according to another embodiment of the present application.
FIG. 7 is a schematic structural diagram of a lower insulation sealing member according to an embodiment of the present application.
FIG. 8 is a schematic structural diagram of a lower insulation sealing member according to another embodiment of the present application.
FIG. 9 is a schematic structural diagram of a case according to an embodiment of the present application.
FIG. 10 is a front view of a cylindrical battery according to another embodiment of the present application.
FIG. 11 is a sectional view of a local part B in FIG. 10.
FIG. 12 is a front view of a cylindrical battery according to another embodiment of the present application.
FIG. 13 is a sectional view of a local part C in FIG. 12.

Reference numerals in the drawings:

| | |
|---|---|
| 1. case; | 11. protrusion block; |
| 12. second placing groove; | 13. engaging groove; |
| 2. jellyroll; | 3. positive current collecting plate; |
| 4. positive pole; | 41. first cylinder; |
| 411. anti-slip convex block; | 42. second cylinder; |
| 43. third cylinder; | 51. upper insulation sealing member; |
| 511. first placing groove; | 512. positioning groove; |
| 513. engaging block; | 52. lower insulation sealing member; |
| 521. annular groove; | 522. third placing groove; |
| 61. first through hole; | 62. second through hole; |
| 63. third through hole; | 71. first annular protrusion block; |
| 72. second annular protrusion block; | 8. negative current collecting plate; and |
| 9. negative cap. | |

### DETAILED DESCRIPTION

It is to be understood that the embodiments described herein are intended to illustrate rather than limiting the present application.

In the description of the application, it is to be appreciated that the orientation or position relationship indicated by terms such as "center", "longitudinal", "transverse", "length", "width", "thickness", "over", "below", "front", "back", "left", "right", "vertical", "horizontal", "top", "bottom", "inside", "outside", "clockwise" or "counterclockwise" is based on the orientation or position relationship shown in the drawings, which is only for the convenience of describing the present application and simplifying the description, rather than indicating or implying that the device or element referred to must have a specific orientation, be configured and operated in a specific orientation, so it cannot be understood as a limitation to the present application. Furthermore, the terms "first" and "second" are only used for description purposes and cannot be understood as indicating or implying relative importance or implicitly indicating the number of indicated technical features. Thus, the features defined as "first" and "second" can explicitly or implicitly include one or more of the described features. In the description of the present application, "multiple" means two or more, unless otherwise specifically defined.

In the description of the present application, it is to be noted that, unless otherwise expressly specified and limited, the terms "mounting", "connected to each other", "connected" are to be construed in a broad sense, for example, as permanently connected or detachably connected or integrally connected; mechanically connected; directly connected to each other or indirectly connected to each other via an intermediary; or internally connection of two components or interaction relationship between two components. For those of ordinary skill in the art, specific meanings of the preceding terms in the present application may be construed based on specific situations.

In the present application, unless otherwise expressly specified and limited, when a first feature is described as "above" or "below" a second feature, the first feature and the second feature may be in direct contact, or be in contact via another feature between the two features. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below" or "underneath" the second feature, the first feature is right under, below or underneath the second feature or the first feature is obliquely under, below or underneath the second feature, or the first feature is simply at a lower level than the second feature.

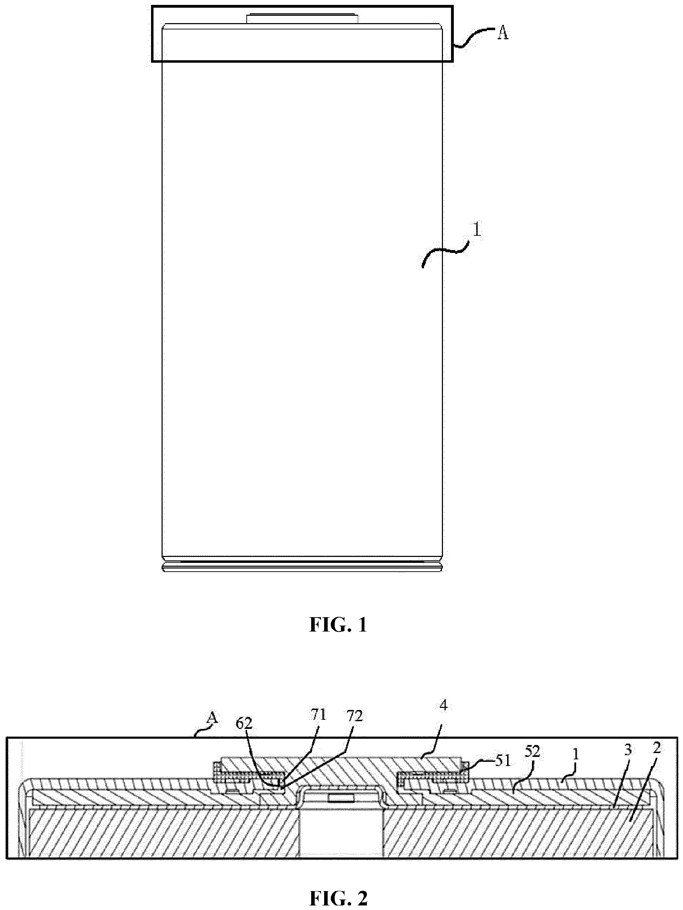

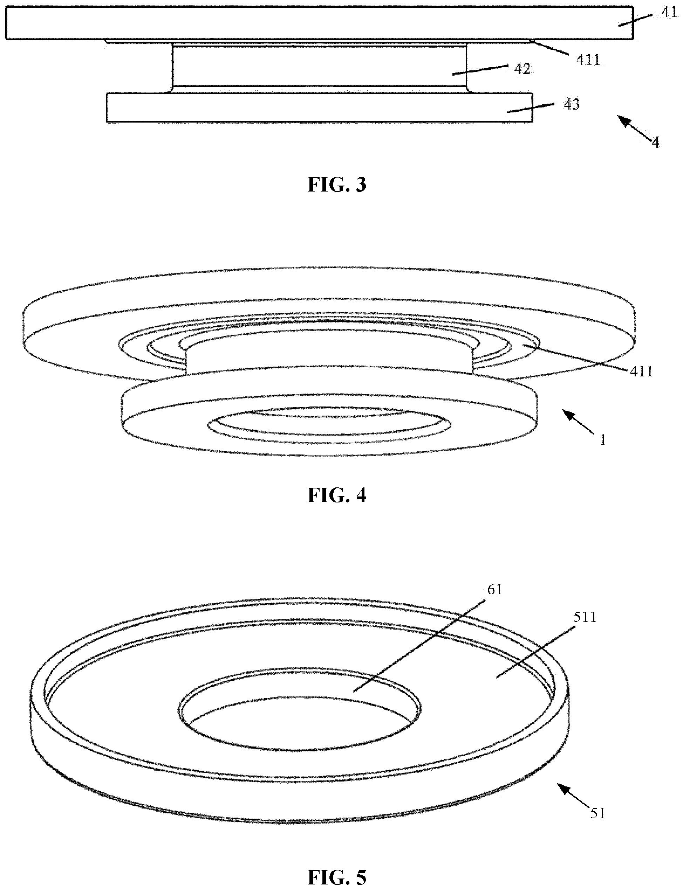

As shown in FIG. 1 to FIG. 2, an embodiment of the present application provides a cylindrical battery, which includes a case 1, a jellyroll 2, a positive current collecting plate 3, a positive pole 4 and an insulation sealing member. The case 1 is a cylindrical groove structure, the positive pole 4 is penetrated into the case 1 via an end face, remote from a groove opening of the case 1, of the case 1, the positive pole 4 is riveted to the case 1, and the insulation sealing member is arranged between the positive pole 4 and the case 1. The jellyroll 2 and the positive current collecting plate 3 are arranged inside the case 1, an end, located inside the groove structure of the case 1, of the positive pole 4 is connected to a positive electrode terminal of the jellyroll 2 through the positive current collecting plate 3, and the positive pole 4 is positively charged. The cylindrical battery is a cylindrical full-tab battery, the jellyroll 2 is a full-tab structure and is prepared by winding, and an end face, remote from the positive pole 4, of the positive current collecting plate 3 is connected to the positive electrode terminal of the jellyroll 2 by laser end-face-welding. As shown in FIG. 3 to FIG. 4, the positive pole 4 is an integrated structure in which three cylinders are coaxially superimposed. The three cylinders are respectively, from top to bottom, a first cylinder 41 serving as a conductive terminal, a second cylinder 42 serving as a connecting rod, and a third cylinder 43 serving as a connecting terminal. The third cylinder 43 has a diameter smaller than the diameter of the first cylinder 41 and larger than the diameter of the second cylinder 42. The third cylinder 43 is arranged inside the case 1, and the first cylinder 41 is arranged outside the case 1. The second cylinder 42 sequentially passes through an upper insulation sealing member 51, the case 1, and a lower insulation sealing member 52.

As shown in FIG. 5, the insulation sealing member includes the upper insulation sealing member 51 and the lower insulation sealing member 52, the upper insulation sealing member 51 is provided with a first through hole 61, the lower insulation sealing member 52 is provided with a third through hole 63, the case 1 is provided with a second through hole 62, and the second cylinder 42 passes through the first through hole 61, the second through hole 62, and the third through hole 63 sequentially. The central axis of the positive pole 4, the central axis of the first through hole 61, the central axis of the second through hole 62, and the central axis of the third through hole 63 all coincide.

As shown in FIG. 5 to FIG. 6, an end face, close to the first cylinder 41, of the upper insulation sealing member 51 is provided with a first placing groove 511, a central portion of a groove bottom face of the first placing groove 511 is provided with an opening of the first through hole 61, and an outer sidewall of the first cylinder 41 is in close contact with an inner sidewall of the first placing groove 511. An end face, in contact with the groove bottom face of the first placing groove, of the first cylinder 41 is provided with an annular anti-slip convex block 411, and the central axis of the anti-slip convex block 411 coincides with the central axis of the first cylinder 41. The first cylinder 41 has a tendency to press the upper insulation sealing member 51 towards the case 1 in a vertical direction, so that the anti-slip convex block 411 may be in close contact with the groove bottom face of the first placing groove 511, thereby increasing the sealing performance between the first cylinder 41 and the upper insulation sealing member 51, and preventing the positive pole 4 from rotating about the central axis of the positive pole 4.

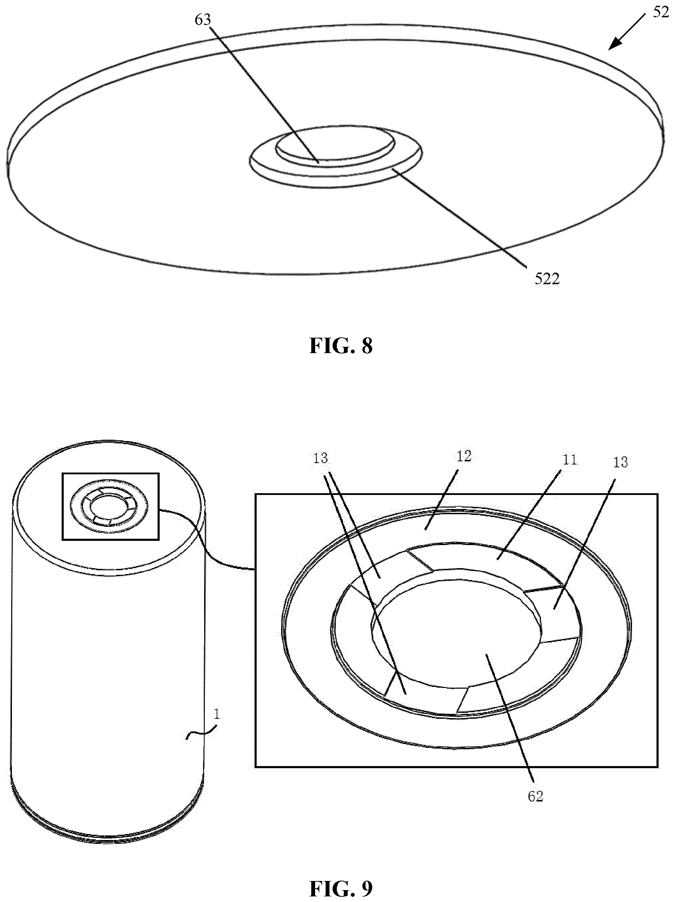

As shown in FIG. 9 to FIG. 10, an end face of the case 1 remote from its groove opening is provided with a second placing groove 12, a central portion of a groove bottom face of the second placing groove 12 is provided with an opening of the second through hole 62, the groove bottom face of the second placing groove 12 is provided with a protrusion block 11, the protrusion block 11 is arranged circumferentially about the central axis of the second through hole 62, and the protrusion block 11 is provided with three engaging grooves 13.

An end face, close to the case 1, of the upper insulation sealing member 51 is provided with a positioning groove 512 fitted with and connected to the protrusion block 11, a groove bottom face of the positioning groove 512 is provided with an opening of the first through hole 61, an edge of the opening is provided with a first annular protrusion block 71, and the groove bottom face of the positioning groove 512 is further provided with engaging blocks 513 fitted with and engaged with the engaging grooves 13 respectively. An outer sidewall of the upper insulation sealing member 51 is in contact with an inner sidewall of the second placing groove 12. A portion, other than the positioning groove 512, of the end face, close to the case 1, of the upper insulation sealing member 51 is in contact with the groove bottom face of the second placing groove 12, and the protrusion block 11 is tightly connected to the positioning groove 512, so that the structure can ensure the sealing performance of the connection between the upper insulation sealing member 51 and the case 1.

The engaging grooves 13 are fitted with and connected to the engaging blocks 513 in an engagement manner, and the engaged connection structure is capable of obstructing rotation of the positive pole 4 about its central axis.

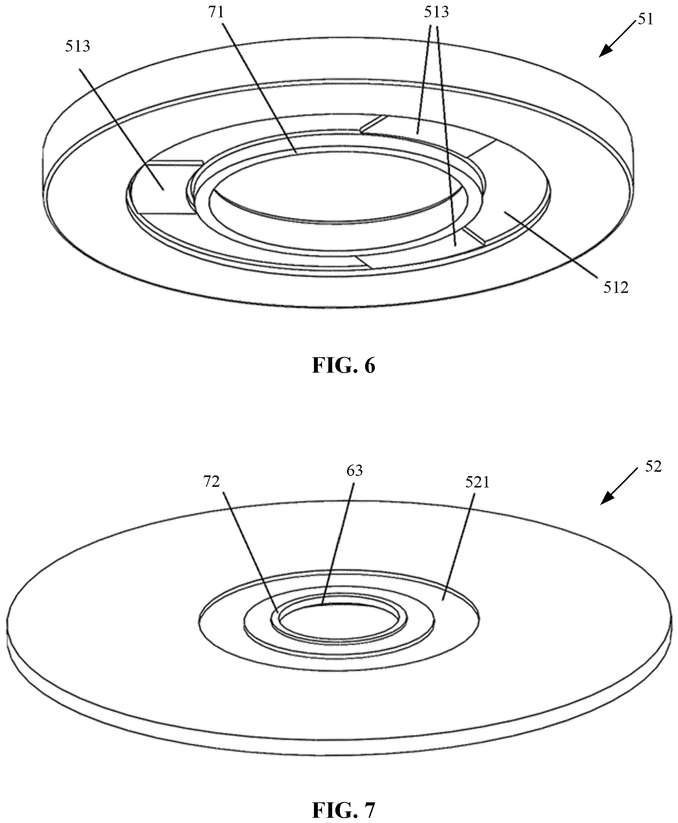

As shown in FIG. 7 to FIG. 8, an end face, remote from the positive current collecting plate 3, of the lower insulation sealing member 52 is provided with an opening of the third through hole 63, an edge of the opening is provided with a second annular protrusion block 72, the end face is further provided with an annular groove 521, and the central axis of the annular groove 521 coincides with the central axis of the third through hole 63.

As shown in FIG. 2, the second placing groove 12 of the case 1 forms an annular protrusion protruding toward the inside of the case, and the annular protrusion is fitted with and connected to the annular groove 521, to prevent the lower insulation sealing member 52 located inside the case 1 from moving in a horizontal direction.

As shown in FIG. 8, an end face, close to the positive current collecting plate 3, of the lower insulation sealing member 52 is provided with a third placing groove 522, the third cylinder 43 is located in the third placing groove 522 and is in contact with a groove bottom face of the third placing groove 522, and the third cylinder 43 has a tendency to press the lower insulation sealing member 52 towards the case in the vertical direction, thereby fixing the lower insulation sealing member 52 in the vertical direction.

As shown in FIG. 2, a maximum width of the positive current collecting plate 3 is larger than the width of the third placing groove 522 but smaller than the width of the lower insulation sealing member 52, and the positive current collecting plate 3 is in close contact with the lower insulation sealing member 52. The lower insulation sealing member 52 prevents the positive current collecting plate 3 and the case from contacting in the vertical direction and the battery short circuit caused by the contacting of the positive current collecting plate 3 and the case, and in this embodiment, the riveting structure of the positive pole 4 to the case 1 in turn prevents the positive current collecting plate 3 and the case from contacting in the horizontal direction and the battery short circuit caused by the contacting of the positive current collecting plate 3 and the case.

As shown in FIG. 2, the first annular protrusion block 71 and the second annular protrusion block 72 extend oppositely in the vertical direction into the second through hole 62 and are filled between the outer sidewall of the second cylinder 42 and the inner sidewall of the second through hole 62. The first annular protrusion block 71 and the second annular protrusion block 72 both function to prevent the second cylinder 42 from contacting the case 1, moreover, the outer sidewall of the second cylinder 42 presses the first annular protrusion block 71 and the second annular protrusion block 72 toward the inner sidewall of the second through hole 62, thereby increasing the friction force between the second cylinder 42 and the first annular protrusion block 71 as well as the friction force between the second cylinder 42 and the second annular protrusion block 72, and thereby preventing the positive pole 4 from rotating.

By the arrangement of the above structure, the positive pole 4 can be prevented from rotating, and the positive pole 4 is further fixed in the vertical direction and the horizontal direction. By the structural design of the cylindrical battery, the stability of the cylindrical battery can be significantly improved.

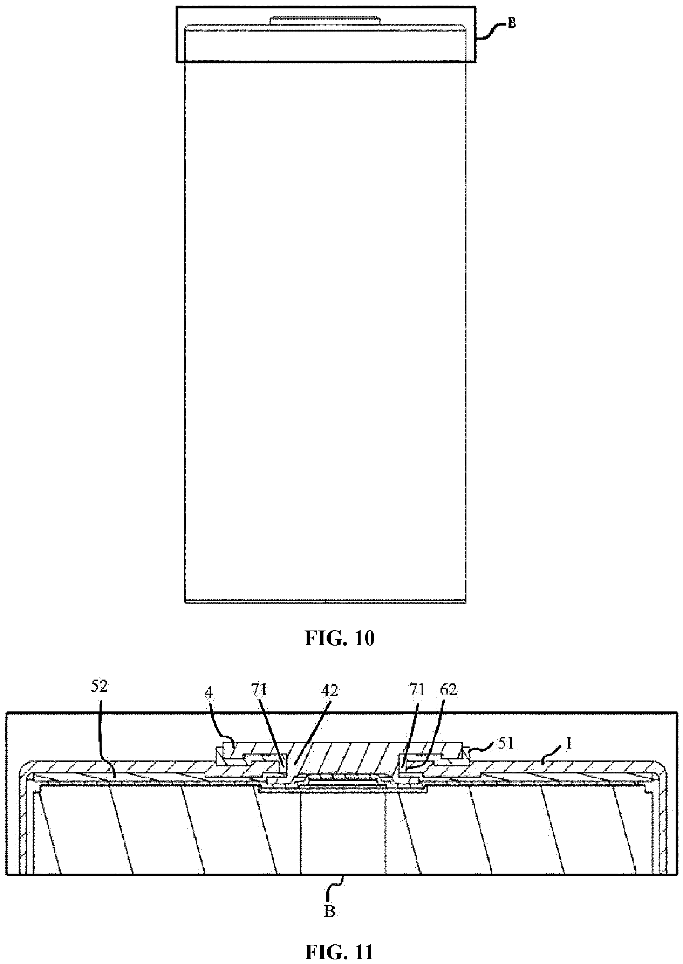

As shown in FIG. 10 to FIG. 11, a cylindrical battery is provided according to this embodiment, this cylindrical battery differs from the cylindrical battery according to the first embodiment in that the lower insulation sealing member 52 of the cylindrical battery according to this embodiment is not provided with the second annular protrusion block 72, and the upper insulation sealing member 51 of the cylindrical battery according to this embodiment is provided with a first annular protrusion block 71. The first annular protrusion block 71 extends into the second through hole 62 and is filled between the outer sidewall of the second cylinder 42 and the inner sidewall of the second through hole 62, and moreover, the outer sidewall of the second cylinder 42 compresses the first annular protrusion block 71 toward the inner sidewall of the second through hole 62 in the horizontal direction, thereby increasing the friction force between the second cylinder 42 and the first annular protrusion block 71, and thereby preventing the positive pole 4 from rotating.

The multiple technical features of the embodiments described above may be combined arbitrarily. For the sake of brevity, not all possible combinations of the multiple technical features of the embodiment described above are described. However, the combinations of these technical features should be considered to be within the scope of the present description as long as no contradictions exist in their combinations.

In the present application, for facilitating the description, an end, located outside the case 1, of the positive pole 4 is referred to as "a conductive terminal", an end, located inside the case 1, of the positive pole 4 is referred to as "a connecting terminal", a connecting rod is arranged between the conductive terminal and the connecting terminal, and the connecting terminal is connected to the positive current collecting plate 3.

The insulation sealing member includes an upper insulation sealing member 51 and a lower insulation sealing member 52, the upper insulation sealing member 51 is arranged outside the case 1 and is engaged with and connected to the case 1, and the lower insulation sealing member 52 is arranged inside the case 1. The upper insulation sealing member 51 is arranged between an end face of the case 1 and the conductive terminal, and the lower insulation sealing member 52 is arranged between the groove bottom face inside the case 1 and the positive current collecting plate 3. The connecting rod sequentially passes through the upper insulation sealing member 51, the case 1 and the lower insulation sealing member 52.

At least one of the upper insulation sealing member 51 and the lower insulation sealing member 52 is provided with an annular protrusion block, the annular protrusion block fits closely against an outer sidewall of a portion, passing through the case 1, of the positive pole 4, and the outer sidewall of the portion, passing through the case 1, of the positive pole 4 can press the annular protrusion block towards an inner sidewall of a portion, being passed through, of the case 4.

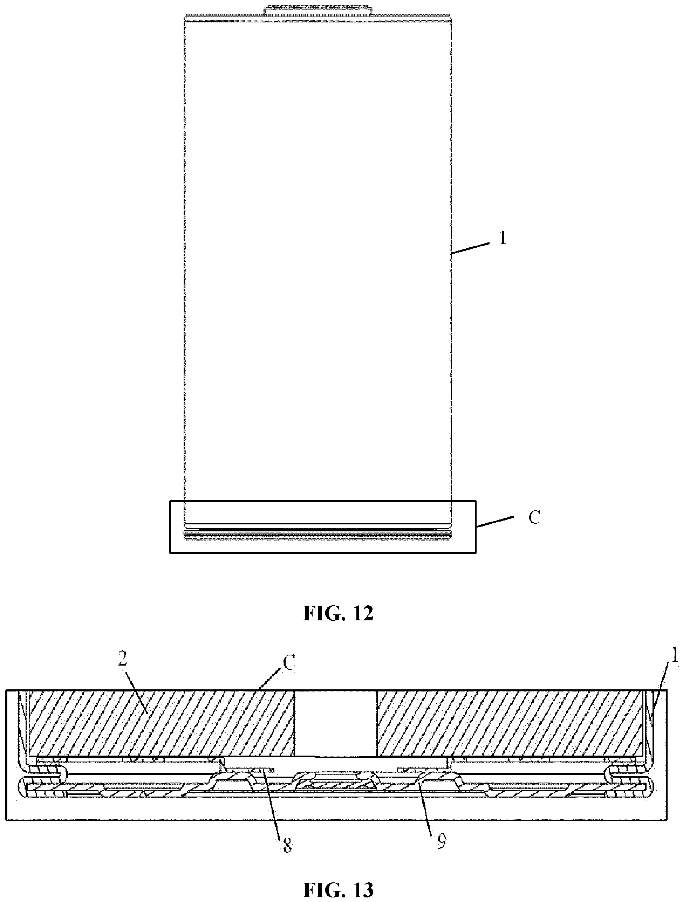

As shown in FIG. 12 to FIG. 13, in an embodiment of the present application, the cylindrical battery further includes a negative current collecting plate 8 and a negative cap 9, the groove opening of the case 1 is connected to the negative cap 9 in a sealed manner, the negative cap 9 is connected to a negative electrode terminal of the jellyroll 2 through the negative current collecting plate 8, therefore, the negative cap 9 is negatively charged. Since the case 1 is made of a non-electrically conductive material, the case 1 is not charged. In this case, the functions of the insulation sealing member include: sealing the portion, passing through the case 1, of the positive pole 4; serving as a buffer layer to prevent contacting and rubbing between the positive pole 4 and the case 1 and the damage resulted from the contacting and rubbing. The positive pole 4 serves as a positive connection terminal, the negative cap 9 serves as a negative connection terminal, and the positive connection terminal and the negative connection terminal are arranged respectively on two end faces of the cylindrical battery.

In an embodiment, the case 1 is electrically connected to the negative current collecting plate 8.

In an embodiment, the cylindrical battery further includes a negative current collecting plate 8 and a negative cap 9, the groove opening of the case 1 is connected to the negative cap 9 in a sealed manner, the negative cap 9 is connected to the negative terminal of the jellyroll 2 through the negative current collecting plate 8, therefore, the negative cap 9 is negatively charged. The case 1 is made of a conductive material and is electrically connected to the negative cap 9, therefore, the case 1 is negatively charged. In this case, the functions of the insulation sealing member include: sealing the portion, passing through the case 1, of the positive pole 4; preventing contacting between the positive pole 4 and the case 1 and the battery short circuit resulted from the contacting. The positive pole 4 serves as a positive connection terminal, the end face, remote from the groove opening, of the case 1 may serve as a negative connection terminal, and the positive connection terminal and the negative connection terminal may be arranged on the same end face of the cylindrical battery.

In another embodiment, the cylindrical battery further includes a negative current collecting plate 8 and a negative cap 9, and the groove opening of the case 1 is connected to the negative cap 9 in a sealed manner. The negative cap 9 only serves as a sealing member, the negative cap 9 is not connected to the negative current collecting plate 8, and an insulation layer is arranged between the negative cap 9 and the case 1, but the case 1 is connected to the negative electrode terminal of the jellyroll 2 through the negative current collecting plate 8, therefore, the case 1 is negatively charged. In this case, the functions of the insulation sealing member include: sealing the portion, passing through the case 1, of the positive pole 4; preventing contacting between the positive pole 4 and the case 1 and the battery short circuit resulted from the contacting. The positive pole 4 serves as a positive connection terminal, the end face, remote from the groove opening, of the case 1 may serve as a negative connection terminal, and the positive connection terminal and the negative connection terminal may be arranged on the same end face of the cylindrical battery.

According to the present application, the positive pole 4 is prevented by such means from rotating: the upper insulation sealing member 51 is engaged with and connected to the end face of the case 1, the engaged connection structure includes the engaging grooves 13 arranged circumferentially about the connecting rod and the engaging blocks 513, and the engaging grooves 13 restrict the engaging blocks 513 from rotating circumferentially about the connecting rod; at least one of the upper insulation sealing member 51 and the lower insulation sealing member 52 is provided with the annular protrusion block, the annular protrusion block fits closely against the outer sidewall of the portion, passing through the case 1, of the connecting rod, and the outer sidewall of the portion, passing through the case 1, of the connecting rod may press the annular protrusion block towards the inner sidewall of the portion, being passed through, of the case 1, to thereby increasing the friction force between the annular protrusion block and the connecting rod. With the arrangement of the above structure, the positive pole 4 can be prevented from rotating.

In the present application, both the upper insulation sealing member 51 and the lower insulation sealing member 52 are made of an insulation material having elasticity.

In an embodiment, in a case where the upper insulation sealing member 51 is provided with an annular protrusion block, the annular protrusion block includes a first annular protrusion block 71, an end face, close to the case 1, of the upper insulation sealing member 51 is provided with an opening of the first through hole 61, and an edge of the opening of the first through hole 61 is provided with the first annular protrusion block 71.

In a case where the lower insulation sealing member 52 is provided with an annular protrusion block, the annular protrusion block includes a second annular protrusion block 72, and an end face, remote from the positive current collecting plate 3, of the lower insulation sealing member 52 is provided with an opening of the third through hole 63, and an edge of the opening of the third through hole 63 is provided with the second protrusion block 72.

## Claims

1. A cylindrical battery, comprising a case, a positive pole and an insulation sealing member, wherein the case is a cylindrical groove structure,
the positive pole is riveted to the case, and the insulation sealing member is arranged between the positive pole and the case;
the insulation sealing member comprises an upper insulation sealing member and a lower insulation sealing member, the upper insulation sealing member is arranged outside the case and is engaged with and connected to the case, and the lower insulation sealing member is arranged inside the case; and
at least one of the upper insulation sealing member and the lower insulation sealing member is provided with an annular protrusion block, the annular protrusion block fits closely against an outer sidewall of a portion, passing through the case, of the positive pole, and the outer sidewall of the portion, passing through the case, of the positive pole presses the annular protrusion block towards an inner sidewall of a portion, being passed through by the positive pole, of the case.

2. The cylindrical battery according to claim 1, further comprising a jellyroll and a positive current collecting plate;
wherein the jellyroll and the positive current collecting plate are arranged inside the case, and a portion, located inside the case, of the positive pole is connected to a positive electrode terminal of the jellyroll through the positive current collecting plate.

3. The cylindrical battery according to claim 2, wherein
in a case where the upper insulation sealing member is provided with the annular protrusion block, the annular protrusion block comprises a first annular protrusion block, an end face, close to the case, of the upper insulation sealing member is provided with an opening of a first through hole, and an edge of the opening of the first through hole is provided with the first annular protrusion block; and
in a case where the lower insulation sealing member is provided with the annular protrusion block, the annular protrusion block comprises a second annular protrusion block, and an end face, remote from the positive current collecting plate, of the lower insulation sealing member is provided with an opening of a third through hole, and an edge of the opening of the third through hole is provided with the second protrusion block.

4. The cylindrical battery according to claim 2, wherein the positive pole is an integrated structure in which three cylinders are coaxially superimposed, the three cylinders are respectively, from top to bottom, a first cylinder, a second cylinder and a third cylinder, the third cylinder has a diameter smaller than the diameter of the first cylinder and larger than the diameter of the second cylinder, the third cylinder is arranged inside the case, the first cylinder is arranged outside the case, and the second cylinder sequentially passes through the upper insulation sealing member, the case, and the lower insulation sealing member.

5. The cylindrical battery according to claim 4, wherein an end face, close to the first cylinder, of the upper insulation sealing member is provided with a first placing groove, an outer sidewall of the first cylinder is in close contact with an inner sidewall of the first placing groove, and an end face, in contact with a groove bottom face of the first placing groove, of the first cylinder is provided with an annular anti-slip convex block.

6. The cylindrical battery according to claim 4, wherein the case is provided with a second placing groove, a groove bottom face of the second placing groove is provided with a protrusion block, the protrusion block is arranged circumferentially around the second cylinder, and the protrusion block is provided with an engaging groove; an end face, close to the case, of the upper insulation sealing member is provided with a positioning groove fitted with and connected to the protrusion block, a groove bottom face of the positioning groove is provided with an engaging block fitted with and engaged with the engaging groove, and an outer sidewall of the upper insulation sealing member is in contact with an inner sidewall of the second placing groove.

7. The cylindrical battery according to claim 8, wherein an end face, remote from the positive current collecting plate, of the lower insulation sealing member is provided with an annular groove, the second placing groove forms an annular protrusion protruding towards the inside of the case, and the annular protrusion is fitted with and connected to the annular groove.

8. The cylindrical battery according to claim 4, wherein an end face, close to the positive current collecting plate, of the lower insulation sealing member is provided with a third placing groove, the third cylinder is placed in the third placing groove and is in contact with a groove bottom face of the third placing groove, a maximum width of the positive current collecting plate is larger than the width of the third placing groove and smaller than the width of the lower insulation sealing member, and the positive current collecting plate is in close contact with the lower insulation sealing member.

9. The cylindrical battery according to claim 2, further comprising a negative current collecting plate and a negative cap;
wherein a groove opening of the case is connected to the negative cap in a sealed manner, and the negative cap is connected to a negative electrode terminal of the jellyroll through the negative current collecting plate.

10. The cylindrical battery according to claim 9, wherein the case is electrically connected to the negative current collecting plate.

11. The cylindrical battery according to claim 2, further comprising a negative current collecting plate and a negative cap;
wherein a groove opening of the case is connected to the negative cap in a sealed manner, the negative cap is not connected to the negative current collecting plate, an insulation layer is arranged between the negative cap and the case, and the case is connected to a negative electrode terminal of the jellyroll through the negative current collecting plate.
